# EUROPÄISCHE PATENTSCHRIFT

(11) **EP 0 437 727 B1**
(45) Veröffentlichungstag und Bekanntmachung des Hinweises auf die Patenterteilung: **10.11.1993**
(21) Anmeldenummer: 90123727.1
(22) Anmeldetag: 10.12.1990
(51) Int. Cl.: B29C 67/20

(54) **Vorrichtung zur kontinuierlichen Herstellung von mit Deckschichten beschichteten Polyurethanschaumstoffplatten**
Machine for the continuous production of lined foam panels
Dispositif pour la fabrication en continu de panneaux en mousse revêtus d'une couche externe

(30) Priorität: 13.01.1990 DE 4000879
(43) Veröffentlichungstag der Anmeldung: 24.07.1991
(73) Patentinhaber: Siempelkamp Handling Systeme GmbH & Co., 82515 Wolfratshausen (DE)
(72) Erfinder: Taubenmann, Peter, W-8000 München (DE); Lisker, Norbert, W-8190 Wolfratshausen (DE); Becker, Gunther, W-8192 Geretsried (DE)
(74) Vertreter: Andrejewski, Walter

(56) Entgegenhaltungen:
- EP-A- 0 126 370
- DE-A- 3 907 015
- GB-A- 1 350 433
- GB-A- 2 045 627
- US-A- 3 215 581

## Beschreibung

Die Erfindung betrifft eine Vorrichtung nach dem Oberbegriff des Patentanspruchs 1.

Derartige Vorrichtungen, die als "Doppelbandanlagen" bezeichnet werden, wie beispielsweise aus GB-A-1 350 433 bekannt, sind in den unterschiedlichsten Ausgestaltungen bekannt. Zur Herstellung der Polyurethanschaumstoffplatten wird ein Reaktionsgemisch mittels eines bei den meisten in der Praxis zum Einsatz kommenden Anlagen quer zur Produktionsrichtung oszillierenden Mischkopfes normalerweise auf die untere Deckschicht aufgetragen. Der Mischkopf woll möglichst leicht und flach sein, damit er zwischen die häufig festen oder nur bedingt biegbaren Deckschichten paßt und schnell beschleunigt und abgebremst werden kann. An dem Mischkopfaustritt ist häufig eine Filmauftragsdüse befestigt, die für eine entsprechend gewünschte Verteilung des Reaktionsgemischs sorgt. Das auf die untere Deckschicht aufgebrachte Gemisch schäumt in Richtung auf die obere Deckschicht auf und verbindet sich mit dieser. Nach dem Aushärten in dem auch als Bandkanal zu bezeichnenden Formhohlraum werden die Schaumstoffplatten besäumt und abgelenkt. Anpassungen an starre oder flexible Deckschichten der einzelnen Bauteile der Doppelbandanlage sind möglich und grundsätzlich bekannt.

In der Praxis ist es unvermeidbar, daß der Mischkopf und insbesondere die Filmauftragsdüsen gereinigt werden müssen, da diese mehr oder weniger schnell zuwachsen. Hierfür ist es erforderlich, den Betrieb zu unterbrechen. Es entstehen nicht nur Ausfallzeiten, sondern der Plattenstrang der während der Unterbrechung und kurz vor dieser und kurz nach dieser erzeugt wird, muß entfernt werden und stellt ein Abfallprodukt dar.

Der Erfindung liegt nun die Aufgabe zugrunde, eine Vorrichtung der eingangs genannten Art zu schaffen, bei der eine Reinigung der Filmauftragsdüsen und ggf. des Mischkopfes ohne Produktionsunterbrechung möglich ist.

Diese Aufgabe wird durch das Kennzeichen des Patentanspruchs 1 gelöst.

Grundsätzlich gibt es zwei Möglichkeiten, bei derartigen Vorrichtungen die Mischköpfe anzuordnen. Häufig sind die Mischköpfe quer zur Produktionsrichtung hin- und herfahrbar, d.h. sie oszillieren. Es sind aber auch Anwendungsfälle denkbar, bei denen die Mischköpfe während des Gemischaustritts stationär sind. Die Mischköpfe sind dann lediglich in ihre Produktionsstellung quer zur Produktionsrichtung verfahrbar. Die Gemischverteilung erfolgt durch entsprechende, ebenfalls feststehende Leiteinrichtungen.

Der Anspruch 2 ist auf die häufig zum Einsatz kommende Ausführungsform mit quer zur Produktionsrichtung oszillierenden Mischköpfen gerichtet.

Erfindungsgemäß sind zwei Mischköpfe an dem Beschichtungsportal vorhanden, von denen immer einer im Einsatz ist. Der eine Mischkopf steht seitlich neben der Vorrichtung in Wartestellung, wohingegen der andere produziert und ggf. oszilliert, um das Komponentengemisch auf die untere Deckschicht aufzutragen. Wenn eine Reinigung erfolgen soll, wird auf den anderen Mischkopf umgeschaltet, d.h. der erste Mischkopf bewegt sich in die Bereitschaftsstellung seitlich neben der Vorrichtung und der andere Mischkopf übernimmt die Produktion. Damit dieser Übergang "fließend" und ohne Unterbrechung möglich ist, sind die Komponentenleitungen so angeordnet und geschaltet, daß eine Unterbrechung der Komponentenströmung vermieden wird, und daß an dem neu eingeschalteten Mischkopf sofort Komponentengemisch in der gewünschten Rezeptur erzeugt wird, d.h. daß beim Umschalten sofort Komponenten unter den erforderlichen Bedingungen (Druck, Temperatur und Rezeptur) bereitstehen. Die Umschaltung erfolgt schnell und ohne Dosierfehler durch Dosierdruckschwankungen sowie Vorlauf- und Nachlaufgemisch nicht richtiger Zusammensetzung. Die beiden Mischköpfe sind praktisch durch ihre Komponentenzulaufleitungen parallel und durch die Verbindungsleitung in Reihe geschaltet. Wenn der eine Mischkopf abgeschaltet wird, dann strömt jede Komponente nach wie vor durch die Zulaufleitung zu diesem abgeschalteten Mischkopf aber nicht in diesen, sondern durch die Verbindungsleitung weiter zu dem anderen Mischkopf. Jede Komponentenzulaufleitung zu jedem Mischkopf wird also fortlaufend durchströmt, unabhängig davon, ob der Mischkopf ein- oder abgeschaltet ist. Die Strömungsrichtung durch die Verbindungsleitung ist davon abhängig, welcher Mischkopf eingeschaltet ist.

Die Verbindungspunkte zwischen den Komponentenzulaufleitungen und der Verbindungsleitung liegen möglichst nahe an dem Mischkopf damit keine nennenswert lange Komponentenleitung vorhanden ist, in denen sich eine fortlaufende Strömung ergeben würde.

Wenn der Mischkopf zur Steuerung des Komponenteneintritts Nadelventile aufweist, so ist die Vorrichtung in vorteilhafter Weise derart ausgebildet, wie in Anspruch 4 angegeben.

Eine besonders vorteilhafte Ausgestaltung ist Gegenstand des Anspruches 5. Wenn die Vorrichtung so ausgebildet ist, dann sind zwei Wegeventile, je eines zur Steuerung jedes Mischkopfes, vorhanden. Die Düsennadeln werden nicht durch Federn, sondern nur hydraulisch beaufschlagt, wobei in Offenstellung für das erforderliche Gleichgewicht gesorgt werden kann. Die hydraulische Beaufschlagung bildet dann praktisch auch die Feder, deren "Federkraft" aber durch den Hydraulikdruck steuerbar ist.

Im folgenden wird die Erfindung unter Hinweis auf die Zeichnungen anhand eines Ausführungsbeispieles näher erläutert.

Es zeigt:
- Fig. 1: eine schematische Seitenansicht einer Doppelbandanlage mit den wesentlichen Bauteilen; und
- Fig. 2: ein Schaltbild mit den Komponenten- und Hydraulikleitungen zur Versorgung der beiden Mischköpfe, jedoch nur auf einer Seite, d.h. die spiegelbildlich vorhandene andere Komponenten- und Hydraulikseite ist nicht dargestellt.

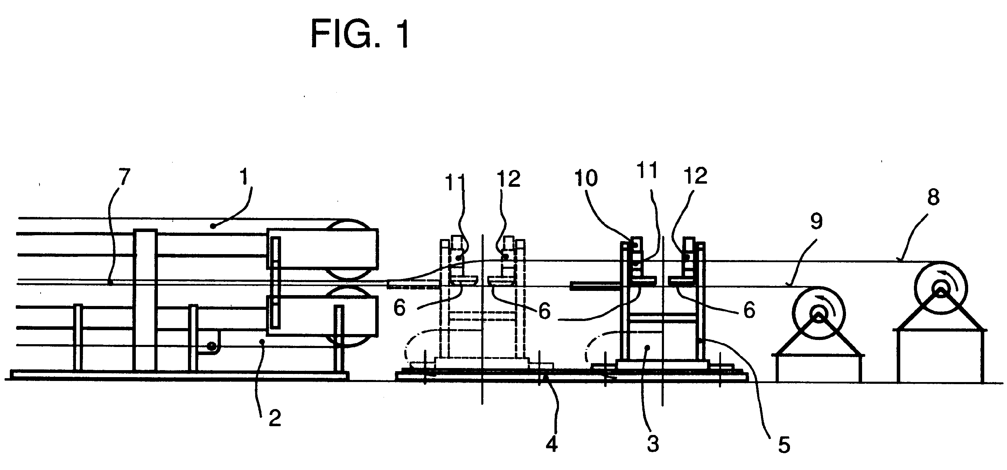

Die in Fig. 1 dargestellte Doppelbandanlage weist ein oberes Band 1 und ein unteres Band 2 auf. Diese beiden Bänder werden synchron so angetrieben, daß sie sich im Bereich des Formhohlraumes 7 gleichsinning bewegen. Ein Beschichtungsportal 3 weist Schienen 4 für Ständer 5 auf, an denen die Mischköpfe 11 und 12 zur Durchführung ihrer oszillierenden Bewegung angebracht sind. Die Bewegung erfolgt durch Servomotoren 10. An jedem Mischkopfaustritt ist eine Filmauftragsdüse 6 angebracht. In den Formhohlraum werden eine obere 8 und eine untere Deckschicht 9 eingeführt.

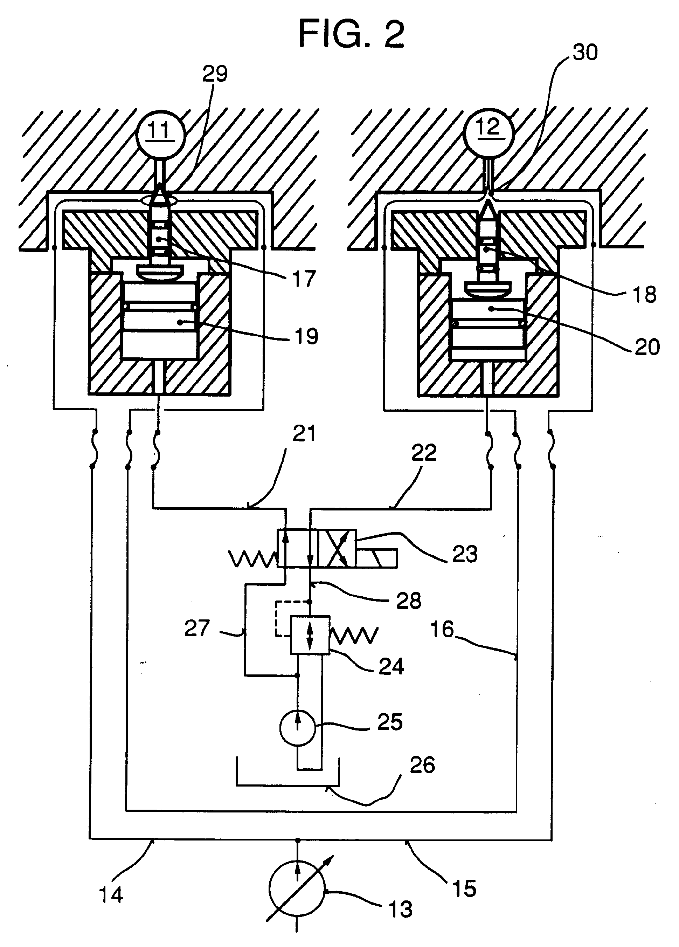

In Fig. 2 sind die beiden Mischköpfe 11 und 12 durch ihre Mischkammern schematisch nebeneinander dargestellt. Zu jedem Mischkopf führt eine Komponentenzulaufleitung 14, 15, von der als Pumpe dargestellten Dosierstation 13. Der Eintritt in die Mischkammer jedes Mischkopfes 11 und 12 erfolgt über hydraulisch gesteuerte Nadeldüsen 17 und 18, die entweder den Eintritt der Komponente freigeben (rechte Darstellung) oder diesen absperren (linke Darstellung). Die Düsennadeln weisen einen Hydraulikkolben 19 bzw. 20 auf.

Die Komponentenzulaufleitungen sind im Bereich der Nadeldüsen durch eine Verbindungsleitung 16 miteinander verbunden, die immer offen ist. Die Verbindungspunkte zwischen Komponentenzulaufleitungen und Verbindungsleitung sind mit 29 und 30 bezeichnet. Beim Betrachten der Fig. 2 wird deutlich, daß bei geschlossenem Nadelventil 17 dieses umströmt wird, so daß die durch die Komponentenzulaufleitung 14 strömende Komponente um das Nadelventil 17 herum in die Verbindungsleitung 16 und von dort zu dem offenen Nadelventil 18 und in den Mischkopf 12 strömt. Wenn umgeschaltet wird, d.h. das Nadelventil 18 geschlossen wird, öffnet das Nadelventil 17 und die Strömungsrichtung in der Leitung 16 kehrt sich um. Durch die Leitungen 14 und 15 strömt nach wie vor die entsprechende Komponente.

Gesteuert werden die Natelventile auf jeder Komponentenseite durch ein 4/2-Wegeventil 23. Zu jedem Hydraulikkolben 19 und 20 der Düsennadeln 17 und 18 führt eine Hydraulikleitung 21 und 22. Mit 24 ist ein Druckregelventil bezeichnet, das von einer Leitung 27 für den Schließdruck der Düsennadeln umströmt wird. Die Hydraulikpumpe 25 wird von einem Tank 26 versorgt. In der Leitung 28 herrscht ein geregelter Druck, der mit dem Komponentendruck im Gleichgewicht steht und in Offenstellung wirkt.

Die Ausführungsform mit Nadelventilen und je einem Wegeventil zur Steuerung einer Komponente stellt eine vorteilhafte Ausführungsform dar. Es sind aber auch andere Ausführungsformen im Rahmen der Erfindung mit anders gestalteten Mischköpfen und nur einem Wegeventil denkbar. Von Vorteil ist es, wenn die Verbindungspunkte 29 und 30 zwischen den Komponentenzulaufleitungen 14 und 15 einer Komponente und der Verbindungsleitung 16 möglichst nahe an der jeweiligen Mischkammer liegen.

Beim Anfahren der Doppelbandanlage fährt der Mischkopf 11 aus der Ruhestellung, die identisch mit der Spülstellung ist, im Schleichgang in den entsprechenden Umkehrpunkt. Von hier aus beginnt die Oszillationsbewegung.

Beim Umschalten von dem Mischkopf 11 auf den Mischkopf 12 fährt der Mischkopf 11 in den genannten Umkehrpunkt. Dort wird der Schaumauftrag für diesen Mischkopf beendet.

Gleichzeitig beginnt die Oszillationsbewegung des zweiten Mischkopfes und das Beschichtungsportal 3 fährt gegen die Produktionsrichtung bis die Filmauftragsdüse dieses Mischkopfes 12 den bereits vom Mischkopf 11 beschichteten Bereich erreicht hat. Der Mischkopf 12 übernimmt den Auftrag des Reaktionsgemisches. Der Mischkopf 11 fährt vom Umkehrpunkt in die Spülstellung.

Zum Umschalten von dem Mischkopf 12 auf den Mischkopf 11 fährt der Mischkopf 12 wiederum zu dem definierten Umkehrpunkt. Dort wird der Schaumauftrag von diesem Mischkopf 12 beendet. Gleichzeitig beginnt die Oszillationsbewegung von dem Mischkopf 11 und das Beschichtungsportal fährt in Produktionsrichtung (siehe strichpunktierte Stellung in Fig. 1), bis der Mischkopf 11 den bereits vom Mischkopf 12 beschichteten Bereich erreicht hat. Der Mischkopf 11 übernimmt den Auftrag des Reaktionsgemisches. Der Mischkopf 12 fährt von dem genannten Umkehrpunkt in die Spülstellung. Die vorher beschriebene Verfahrensweise wird dann immer abwechselnd durchgeführt.

Das Beschichtungsportal 3 ist also auf den Schienen 4 auch in Produktionsrichtung verfahrbar, um jeweils eine Einstellung auf die vorausgegangene Beschichtung zu ermöglichen. An diesem Beschichtungsportal sind die Mischköpfe zur Durchführung der oszillierenden Bewegung hin- und herbewegbar.

Bei einer anderen Ausführungsform oszillieren die Mischköpfe nicht. Sie sind lediglich in Produktionsstellung oberhalb der unteren Deckschicht verfahrbar. Auch bei dieser Ausführungsform wird der eine Mischkopf zum Reinigen aus der Produktionsstellung heraus und der andere in Produktionsstellung gefahren, um für eine Produktion ohne Unterbrechung zu sorgen.

## Patentansprüche

1. Vorrichtung zur kontinuierlichen Herstellung von mit Deckschichten beschichteten Polyurethanschaumstoffplatten, mit zwei einen Formhohlraum zwischen sich definierenden endlosen Transportbändern (1 und 2) und mit einem Beschichtungsportal (3), an dem ein in Produktionsstellung oberhalb des unteren Transportbandes (2) bzw. der unteren Deckschicht bewegbarer Mischkopf (11) angeordnet ist, der durch je eine Komponentenzulaufleitung (14) mit einer Dosierstation (13) für die entsprechende Komponente verbunden ist, dadurch gekennzeichnet, daß an dem Beschichtungsportal (3) ein zweiter, von dem ersten (11) unabhängig in Produktionsrichtung bewegbarer Mischkopf (12) angeordnet ist, zu dem ebenfalls eine Komponentenzulaufleitung (15) von der Dosierstation (13) führt, und daß zwischen den beiden Komponentenzulaufleitungen (14, 15) eine immer offene Verbindungsleitung (16) vorgesehen ist.

2. Vorrichtung nach Anspruch 1, dadurch gekennzeichnet, daß die Mischköpfe (11, 12) während des Schaumauftrags quer zur Produktionsrichtung oszillieren.

3. Vorrichtung nach Anspruch 1 oder 2, dadurch gekennzeichnet, daß jeder Verbindungspunkt (29, 30) der Verbindungsleitung (16) mit den Komponentenzulaufleitungen (14, 15) möglichst nahe an dem ihm zugeordneten Mischkopf (11 oder 12) liegt.

4. Vorrichtung nach Anspruch 3, dadurch gekennzeichnet, daß als Steuerventile am Eintritt der Komponentenzulaufleitungen (14, 15) in den Mischkopf (11, 12) hydraulische Nadelventile vorgesehen sind, deren Düsennadeln (17, 18) in Schließstellung von der Komponente umspült sind, und dabei den entsprechenden Verbindungspunkt (29, 30) bilden.

5. Vorrichtung nach Anspruch 4, dadurch gekennzeichnet, daß zur hydraulischen Druckbeaufschlagung der Düsennadeln (17, 18) für jede Komponente ein Wegeventil (23) vorgesehen ist, und daß der Hydraulikkolben (19, 20) jedes Nadelventils die Düsennadeln (17, 18) entweder mit dem hydraulischen Schließdruck oder in Offenstellung mit einem geregelten, mit dem Komponentendruck im Gleichgewicht stehenden hydraulischen Druck beaufschlagt.

## Claims

1. An apparatus for the continuous production of polyurethane foam sheets coated with covering layers, having two continuous transport belts defining a mold cavity between them and having a coating gate at which a mixing head is arranged and can be moved into the production position above the lower transport belt or the lower covering layer and is connected to a metering station for each component by a component supply line, wherein a second mixing head (12), which can be moved into the production direction independently of the first mixing head (11) and to which a component supply line (15) again leads from the metering station (13), is arranged at the coating gate (3), and wherein a connecting line (16), which is always open, is provided between the two component supply lines (14, 15).

2. An apparatus as claimed in claim 1, wherein the mixing heads (11, 12) oscillate transversely to the production direction during foam application.

3. An apparatus as claimed in claim 1 or 2, wherein each connecting point (29, 30) of the connecting line (16) to the component supply lines (14, 15) is as close as possible to the mixing head (11 or 12) associated therewith.

4. An apparatus as claimed in claim 3, wherein hydraulic needle valves, around whose valve pins (17, 18) the component flows in the closed position, are provided as control valves at the inlet of the component supply lines (14, 15) into the mixing heads (11, 12), forming the corresponding connecting points (29, 30).

5. An apparatus as claimed in claim 4, wherein a directional control valve (23) is provided for hydraulic pressure actuation of the needle valves (17, 18) for each component, and wherein the hydraulic pistons (19, 20) of each needle valve act on the valve pins (17, 18) either with the hydraulic closing pressure or, in the open position, with a regulated hydraulic pressure which is in balance with the component pressure.

## Revendications

1. Dispositif de fabrication en continu de plaques alvéolaires en polyuréthane, recouvertes de couches de recouvrement, avec deux bandes transporteuses continues, définissant entre elles un espace creux de moulage et avec un portique de recouvrement, sur lequel est disposée une tête de mélange susceptible de se déplacer, en une position de production, au-dessus de la bande transporteuse inférieure, ou au-dessus de la couche de revêtement inférieure, en étant reliée, au moyen de conduites d'amenée de composants individuelles, à un poste de dosage destiné aux composants correspondants, caractérisé en ce que, sur le portique de revêtement (3), est disposée une deuxième tête de mélange (12), déplaçable dans la direction de production, indépendamment de la première tête de mélange (11), tête (12) à laquelle également mène une conduite d'amenée de composants (15) venant du poste de dosage (13), et en ce qu'entre les deux conduites d'amenée de composants (14, 15) est prévue une conduite de liaison (16), toujours ouverte.

2. Dispositif selon la revendication 1, caractérisé en ce que les têtes de mélange (11, 12) oscillent transversalement par rapport à la direction de production, pendant l'application de produit alvéolaire.

3. Dispositif selon la revendication 1 ou 2, caractérisé en ce que chaque point de liaison (29, 30) de la conduite de liaison (16) avec les conduites d'amenée de composants (14, 15) est situé le plus près possible de la tête de mélange (11 ou 12) qui lui est associée.

4. Dispositif selon la revendication 3, caractérisé en ce que des soupapes à aiguille hydrauliques, dont les aiguilles de buses (17, 18) sont rincées par les composants dans la position de fermeture, et qui constituent alors le point de liaison (29, 30) correspondant, sont prévues à titre de soupapes de commande, à l'entrée des conduites d'amenée de composants (14, 15) dans la tête de mélange (11, 12).

5. Dispositif selon la revendication 4, caractérisé en ce qu'une soupape multivoies (23) est prévue pour alimenter en pression hydraulique les aiguilles de buses (17, 18) pour chaque composant, et en ce que le piston hydraulique (19, 20) de chaque soupape à aiguille alimente en pression hydraulique les aiguilles de buses (17, 18), soit en pression hydraulique de fermeture, soit en position d'ouverture, avec une pression hydraulique réglée, équilibrée par rapport à la pression des composants.
